# EUROPEAN PATENT SPECIFICATION

(11) **EP 2 217 422 B1**
(45) Date of publication and mention of the grant of the patent: **14.05.2014**
(21) Application number: 08850522.7
(22) Date of filing: 14.11.2008
(51) Int. Cl.: B29B 17/02, B02C 4/02

(54) **DEVICE AND METHOD FOR PROCESSING PARTICLES**
VORRICHTUNG UND VERFAHREN ZUR PARTIKELBEHANDLUNG
DISPOSITIF ET PROCEDE DE TRAITEMENT DE PARTICULES

(30) Priority: 16.11.2007 NL 1034706
(43) Date of publication of application: 18.08.2010
(73) Proprietor: Granuband B.V., 1045 AS Amsterdam (NL)
(72) Inventor: Slangen, Johan Herman Marie Rene, 6419 EZ Heerlen (NL)
(74) Representative: Algemeen Octrooi- en Merkenbureau B.V.
(86) International application number: PCT/EP2008/009638
(87) International publication number: WO 2009/062727

(56) References cited:
- DE-B- 1 085 015
- DE-C- 553 525
- FR-A- 882 940
- JP-A- 5 069 443
- JP-A- 57 100 805
- JP-A- 57 163 525
- US-A- 4 599 131
- US-A- 5 312 052
- US-B1- 6 199 778

## Description

The invention relates to a device according to the preamble of claim 1.

A device is disclosed in the US patent application 2001/0047585.

In this device of prior art automotive tyres, after removal of the reinforcing wires in the rim parts of the tyre, are cut into pieces which are conveyed by a number of systems consisting of fixedly mounted pairs of rollers, generating compressive and shearing forces that separate the rubber from the metal wires in the pieces of tyre. With this device of prior art a fraction of rubber particles can be obtained which is suitable for further processing, since at that stage they contain hardly any metal parts. The metal fraction is not suitable for re-use because there are still very many small rubber parts on the metal wire parts, which means that the metal wire is not yet suitable for re-use.

This object of the invention is to provide a device of the above-mentioned type in which this problem is avoided.

This object is achieved according to the invention by the characterizing features of claim 1.

The publication FR 882940 discloses a device used for processing plants and minerals. The device comprises a number of systems each consisting of a pair of rollers which together form a nip. the nip between the two rollers of each roller system is equal in size to the nip between the rollers of the preceeding roller system as seen in the direction of movement of particles to be processed.

The publication US 6199778 discloses a roller-crusher used for glass fibres also comprising a number of systems each consisting of a pair of rollers. Two consecutive roller systems have one roller in common.

As a result of this configuration of the roller systems the particles are following a zigzag transport path with a constantly changing bend direction, whereby the shearing forces changes from direction and thereby the separation is increased and improved, so that in practice all the adhered parts of the "oblong parts" are finally removed.

The invention also relates to a method for processing a mixture of particles, which mixture contains particles consisting of "oblong parts", such as pieces of wire, pieces of tube or strips, and contaminated parts adhered to them, with a modulus of elasticity which deviates considerably from the modulus of elasticity of the oblong parts, wherein at least one processing device according to the invention is used, and wherein the particle are previously fed to the processing device, the particles being separated from each other by means of a loosening device.

Other features and advantages of the invention will become clear from the following description, reference being made to the attached drawings in which
Fig. 1 is a schematic representation of implementing the method, which comprises an installation with different process steps and the processing device according to the invention and
Fig. 2 is a schematic drawing of the path followed by the particles in the processing device according to fig. 1. part 1.

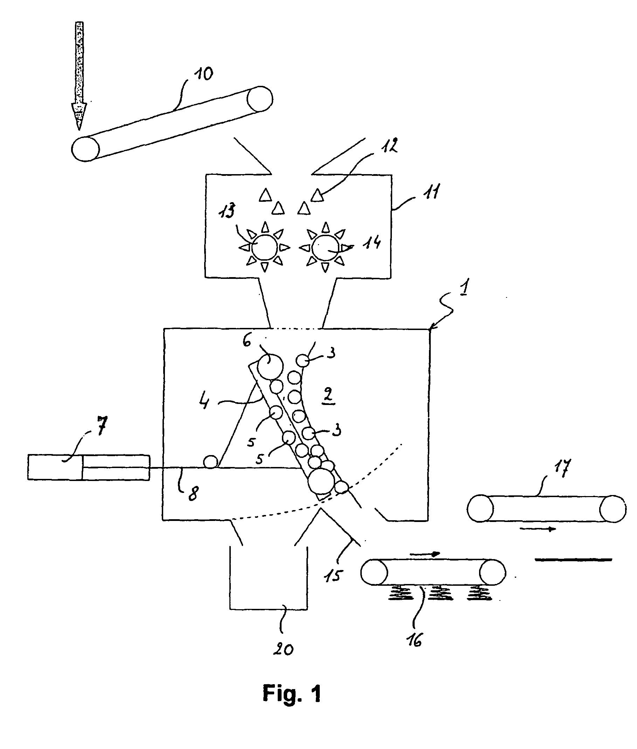

The installation represented in figure 1 comprises a processing device 1, which has a first frame 2 in which a number of rollers 3 are rotatably mounted. These rollers 3 can be rotatorily driven by a drive not shown in greater detail, the direction of rotation in the figure being opposed to the clockwise direction. Frame 2 is fixedly mounted inside processing device 1. A second frame 4 is installed displaceably relative to frame 2 inside processing device 1. A number of rollers 5 are also rotatably mounted in frame 4, the centrelines of rollers 3 and 5 being parallel. Rollers 5 may also be rotatarily driven by means of a drive system not shown in detail, wherein the direction of rotation is opposite the direction of rotation of rollers 3 in the drawing. Rollers 3 and 5 form a number of systems each comprising two rollers which together form a nip by means of which the particles that are to be treated can be conveyed. In the embodiment shown the particles will be fed to the top, and after passing through a number of nips are discharged at the bottom. In this case the size of the nip between the rollers of each system decreases as the position of the system concerned becomes lower in the arrangement.

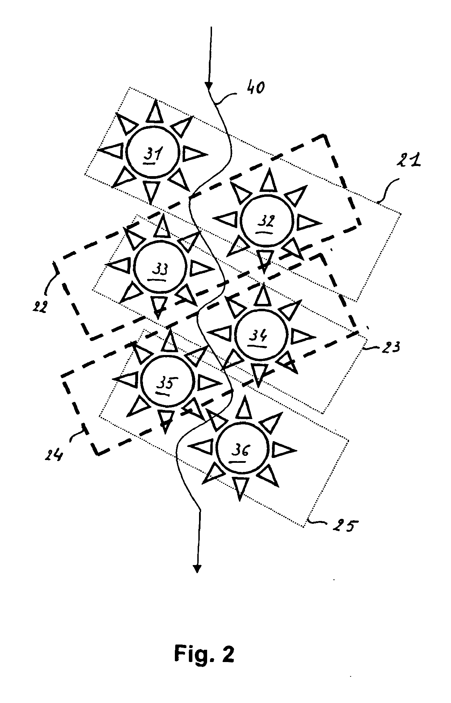

As shown schematically in figure 2 the installation can be seen as being composed of a number of roller systems 21, 22, 23, 24 and 25 each comprising two rollers 30, 31 and 31, 32 and 32, 33 and 33, 34 and 34, 35 and 35, 36, each consecutive roller system having one common roller. In the roller systems 21 and 22 etc. In this way the transport path 40 for the particle is formed as a zigzag transport path through the installation. In this way the shearing forces are changed in bend direction and so increases the shearing forces and thereby the separation is improved. More over each roller is used twice, thereby increasing the efficiency of the shearing forces of the roller surface and reducing the volume of the installation. This is especially the case if consecutive rollers with the same diameter are used.

Frame 4 is rotatably mounted around an axis 6 and is connected to a piston cylinder system by means of a piston rod 8. The piston cylinder system may be a pneumatic system, but it may also be a controlled hydraulic system. The piston cylinder system may possibly be replaced by a corresponding mechanical system. The nip between the rollers of the different systems are adjusted by means of this piston cylinder system, wherein the nip in the bottommost systems is smaller than the nip in the higher systems.

Moreover, the system can be fully opened so that the space between rollers 3 and 5 becomes fully accessible. However, it is more important that when an excess pressure is generated in the nip of one of the systems which form rollers 3 and 5 a movement is created by this at that time in frame 4, causing it to separate from frame 2, thereby eliminating the excess pressure. Such an excess pressure may be generated when parts that are too large or large, hard objects which do not belong here are found in the processing device, or when an accumulation of particles takes place at a particular point.

This opening of the space between the two systems of rollers 3 and 5 may also be of interest when the maximum adjustable power for driving the rolls is exceeded. In this case the nip between rollers 3 and 5 is also opened.

The installation also comprises a feed system in embodiment represented, namely a conveyor belt for the particles to be processed. These particles consist of "oblong parts", and contaminated parts adhered to them with a modulus of elasticity that deviates considerably from the modulus of elasticity of the oblong parts. Examples of such particles are crushed parts of automotive tyres, wherein the oblong parts are formed by the metal reinforcing wires and the parts adhered to them consist of rubber. However, the invention is not limited to these types of particles. It is therefore also possible to process other "oblong parts" which consist of crushed, for example, optical fibres which are coated with a plastic protective layer or copper cable which are coated with a plastic protective layer or green house sealing's which consist of aluminium strips with a rubber sealing and so on..

Before particles are fed to the conveyor (belt) of the installation their size is reduced to a certain size. This size depends, among other things, on the nature of the raw material of the consistency of the particles. Another factor here is the use of the particles after they have been processed according to the invention. The size may vary between 5 and 120 mm for the rubber parts, for example, as a function of these factors.

In the following description an application of the installation for particles derived from automotive tyres will be examined , but it is clear that the invention is not limited to this application. In the case of truck tyres the size reduction of the particles is for example with a maximum size of 100 mm for the rubber parts. After the size reduction a separation of metal and rubber parts takes place. This may be possible, for example, by means of magnetic forces, the rubber parts containing no further metal being separated from the remainder. The remaining metal wires with contaminated rubber parts adhered to them are then fed to the installation as represented.

From conveyor (belt) 10 these particles fall into a loosening device 11. Since these products are wire-like in nature, the particles tend to hook onto each other and move as one mass. To counteract this a first loosening mechanism is already used in most cases for conveyor (belt) 10. This is repeated once more after conveyor (belt) 10 and just before the particles are fed to processing device 1. In the embodiment represented loosening device 11 consists of a mechanical separation formed by a number of rods 12 which form a type of screen for the particles, causing the particles to be separated from each other because they are forced between rods 12 through different openings. The particles then fall onto a pair of rollers 13, 14. Rollers 13 and 14 have a toothed surface and the particles will therefore be mechanically repelled from each other in a bend between rollers 13 and 14. In this manner the particles are fed as individually as possible to processing device 1.

Of course it is possible to use other types of loosening devices. Such devices may, for example, consist of vibrating chutes, whether or not provided with mechanical obstacles that cause the particles to tear apart mechanically.

A further extra separation step may be effected between loosening device 11 and processing device 1. This may be important, for example, for separating the pure metal parts from the rubber so that the quantity of particles to be processed is reduced. Such an additional separation may be effected by accelerating the particles, then using the mass inertia of the particles to achieve the separation. In this case this may be carried out by using the gravity force and a chute on which the particles move. On the other hand the particles are brought into free fall and are subject to a transverse air flow causing the particles to be blown out of the flow with a lower specific gravity. Such an additional separation step may be advantageous because on the one hand it reduces the quantity of particles which must be fed to the device, and the device is therefore subjected to a lower load.

After the particles have passed through processing device 1 between rollers 3 and 5, they arrive in a discharge chute 15 along which the resultant particles are fed to a conveyor (belt) 16. Whilst present in the processing device the fed particles are subjected to compressive forces and shearing forces which increase as the particles progress through the device. These forces will cause a separation between the metal wires and the rubber particles adhering to them. By correctly adjusting the nip dimensions, the process can be controlled in such a manner that almost 100% separation takes place between the metal and rubber. This means that the particles which are fed onto conveyor (belt) 16 consist of almost 100% clean metal or almost 100% clean rubber.

A conveyor (belt) 17, produced from magnetisable material is located close to the discharge end of and above conveyor (belt) 16.. The magnetic conveyor (belt) may also be constructed as a magnetic roller, plate or another form. Since the metal particles are magnetisable, the metal particles will be attracted? pulled by magnetic conveyor (belt) 17 and conveyed further. The non-magnetisable particles, such as the rubber particles, stay on the conveyor and are collected at the end of conveyor (belt) 16.. They are suitable for re-use since they consists of practically 100% clean rubber. The metal particles are separated from the belt and collected at the end of conveyor (belt) 17. These particles consists almost 100% clean metal, which is therefore directly suitable for re-use in a suitable processe or as raw material..

If a disturbance occurs during the operation of the device, causing frame 4 to open, i.e. in figure 1 it is displaced to the left, which may occur when particles that are too large are fed into the operating device or through an accumulation of particles, then the particles who are still being fed are collected in bin 20. The particles that are collected here can be re-used and fed back at the conveyor (belt) 10. The direction of movement of conveyor (belt) 16 can simultaneously be reversed so the particles which are possibly not adequately processed are also collected in bin 20.

It is clear that the invention is not limited to the embodiments described and represented, but that numerous modifications can be installed within the scope of the claims.

## Claims

1. A device (1) for processing a mixture of particles (12), which mixture contains particles consisting of "oblong parts" such as pieces of wire, pieces of tube, strips and/or other parts and contaminated parts adhered to them, and possibly loose particles with a modulus of elasticity which deviates considerably from the modulus of elasticity of the oblong parts, which device comprises a number of roller systems (21-25) wherein each roller system consists of a pair of rollers (35; 30-36) which together form a nip, wherein at least one roll can be driven in a rotatably way and wherein a number of such roller systems are placed one behind the other, enabling the particles to be conveyed, wherein the nip between the rollers of each roller system is equal in size to or smaller than the nip between the rollers of the preceding roller system as seen in the direction of movement of the particles, and wherein in two consecutive roller systems, each time one roller is common to both systems, **characterized in that** the nip in bottom most systems is smaller than the nip in higher systems.

2. The device according to Claim 1, **characterised in that** within each system both rollers are driven in a rotatably way, wherein the circumferential speed of the two rollers is aligned in the same direction in the nip within each system but differs mutually in speed size.

3. The device according to any one of the preceding claims, **characterised in that** the circumferential speed of one of the rollers in a system, as seen along the direction of transport of the particles, is equal to or greater than the circumferential speed of one of the rollers in the immediately preceding system.

4. The device according to any one of the preceding claims, **characterised in that** at least one roll in each roller system is mounted on a first frame (4) which is displaceable and adjustable with respect to a second frame (2) on which the other rollers of each roller system are mounted, and **in that** the first frame is connected to a pressure system (8) that forces the first frame with an adjustable pressure in the direction of the second frame, which pressure system permits a movement of the first frame in a direction away from the second frame if an adjustable excess pressure is generated in one of the nips and/or a maximum adjustable power is reached.

5. The device according to any one of the preceding claims, **characterised in that** at least some of the rollers have a roller surface with a profile that has a variable diameter viewed in the circumferential direction of a roller.

6. A method for processing a mixture of particles (12), which mixture contains particles consisting of "oblong parts", such as pieces of wire, pieces of tubes or strips and parts adhered to them, or possibly of loose particles with a modulus of elasticity which deviates considerably from the modulus of elasticity of the oblong parts, wherein at least a processing device according to any one of claims 1 to 5 is used, **characterised in that** before the particles are fed to the processing device (1) the particles are separated from each other by means of a loosening device (11) **in that** between the loosening and processing device the mixture of particles is separated into particles with a high and low specific gravity respectively, and **in that** the separation is effected by accelerating the mixture of particles between the loosening and processing device and using the inertia of the particles when separating the particles with a high and low specific gravity respectively.

7. The method according to claim 6, **characterised in that** the mixture of particles make a free fall between the loosening and processing device and are subjected to a transverse air flow during this free fall.

## Patentansprüche

1. Vorrichtung (1) zur Verarbeitung eines Partikelgemischs (12), wobei das Gemisch Partikel enthält, die aus "länglichen Teilen", wie etwa Drahtstücken, Rohrstücken, Streifen und/oder aus sonstigen Teilen und daran haftenden verschmutzen Teilen bestehen, sowie möglicherweise lose Partikel mit einem Elastizitätsmodul, das erheblich von dem Elastizitätsmodul der länglichen Teile abweicht, wobei die Vorrichtung eine Anzahl an Walzensystemen (21-25) aufweist, wobei jedes Walzensystem aus zwei Walzen (3, 5; 30-36) besteht, die zusammen einen Spalt bilden, wobei zumindest eine Walze in Drehung angetrieben werden kann und eine Anzahl derartiger Walzensysteme hintereinander angeordnet sind und das Transportieren der Partikel ermöglichen, wobei der Spalt zwischen den Walzen jedes Walzensystems dem Spalt zwischen den Rollen des in Bewegungsrichtung der Partikel gesehen vorhergehenden Walzensystems entspricht oder kleiner ist als dieser und wobei in zwei aufeinanderfolgenden Walzensystemen jedes Mal beide Systeme eine Walze gemeinsam haben, **dadurch gekennzeichnet, dass** der Spalt in untersten Systemen kleiner ist als der Spalt in höheren Systemen.

2. Vorrichtung nach Anspruch 1, **dadurch gekennzeichnet, dass** innerhalb jedes Systems beide Walzen in Drehung angetrieben sind, wobei die Umfangsgeschwindigkeiten der beiden Walzen in dem Spalt innerhalb jedes Systems in gleicher Richtung ausgerichtet sind, sich jedoch hinsichtlich der Höhe der Geschwindigkeit voneinander unterscheiden.

3. Vorrichtung nach einem der vorhergehenden Ansprüche, **dadurch gekennzeichnet, dass** die Umfangsgeschwindigkeit einer der Walzen in einem System in Partikeltransportrichtung gesehen der Umfangsgeschwindigkeit einer der Walzen im unmittelbar vorhergehenden System entspricht oder größer ist als diese.

4. Vorrichtung nach einem der vorhergehenden Ansprüche, **dadurch gekennzeichnet, dass** mindestens eine Walze in jedem Walzensystem an einem ersten Rahmen (4) angebracht ist, der in Bezug auf einen zweiten Rahmen (2), an dem die anderen Walzen jedes Walzensystems angebracht sind, verschiebbar und einstellbar ist, und der erste Rahmen mit einem Drucksystem (8) verbunden ist, das den ersten Rahmen mit einstellbarem Druck in Richtung des zweiten Rahmens drängt, wobei das Drucksystem eine Bewegung des ersten Rahmens in eine Richtung weg von dem zweiten Rahmen gestattet, wenn ein einstellbarer überschüssiger Druck in einem der Spalte erzeugt wird und/oder eine maximal einstellbare Leistung erreicht ist.

5. Vorrichtung nach einem der vorhergehenden Ansprüche, **dadurch gekennzeichnet, dass** zumindest einige der Walzen eine Walzenfläche mit einem Profil aufweisen, das in Umfangsrichtung einer Walze gesehen einen variablen Durchmesser hat.

6. Verfahren zur Verarbeitung eines Partikelgemischs (12), wobei das Gemisch Partikel enthält, die aus "länglichen Teilen", wie etwa Drahtstücken, Rohrstücken oder Streifen, und aus daran haftenden Teilen bestehen oder möglicherweise aus losen Partikeln mit einem Elastizitätsmodul, das erheblich von dem Elastizitätsmodul der länglichen Teile abweicht, wobei mindestens eine Verarbeitungsvorrichtung nach einem der Ansprüche 1 bis 5 verwendet wird, **dadurch gekennzeichnet, dass** die Partikel vor der Zuführung der Partikel zur Verarbeitungsvorrichtung (1) mittels einer Lösevorrichtung (11) voneinander getrennt werden, zwischen der Lösevorrichtung und der Verarbeitungsvorrichtung das Partikelgemisch in Partikel mit einer hohen bzw. einer niedrigen spezifischen Dichte getrennt werden und die Trennung dadurch erfolgt, dass das Partikelgemisch zwischen der Lösevorrichtung und der Verarbeitungsvorrichtung beschleunigt wird und die Trägheit der Partikel bei der Trennung der Partikel mit einer hohen bzw. einer niedrigen spezifischen Dichte genutzt wird.

7. Verfahren nach Anspruch 6, **dadurch gekennzeichnet, dass** sich das Partikelgemisch zwischen der Lösevorrichtung und der Verarbeitungsvorrichtung im freien Fall befindet und bei diesem freien Fall einem querverlaufenden Luftstrom ausgesetzt ist.

## Revendications

1. Dispositif (1) de traitement d'un mélange de particules (12), lequel mélange contient des particules consistant en des « parties oblongues » telles que des morceaux de fil, des morceaux de tube, des bandes et/ou d'autres parties et des parties contaminées collées à celles-ci, et éventuellement des particules détachées avec un module d'élasticité qui dévie considérablement du module d'élasticité des parties oblongues, lequel dispositif comprend un certain nombre de systèmes à galets (21 à 25), dans lequel chaque système à galets consiste en une paire de galets (3, 5 ; 30 à 36) qui forment ensemble une ligne de contact, dans lequel au moins un rouleau peut être entraîné de manière rotative et dans lequel un certain nombre de ces systèmes à galets sont placés les uns derrière les autres permettant l'acheminement des particules, dans lequel la ligne de contacts entre les galets de chaque système à galets est de taille inférieure ou égale à la ligne de contact entre les galets du système à galets précédent vu dans la direction de déplacement des particules, et dans lequel dans deux systèmes à galets consécutifs, un galet est à chaque fois commun aux deux systèmes, **caractérisé en ce que** la ligne de contact dans des systèmes les plus au fond est plus petite que la ligne de contact dans les systèmes plus haut.

2. Dispositif selon la revendication 1, **caractérisé en ce que** dans chaque système, les deux galets sont entraînés de manière rotative, dans lequel la vitesse circonférentielle des deux galets est alignée dans la même direction dans la ligne de contact l'intérieur de chaque système mais leur taille de vitesse diffère mutuellement.

3. Dispositif selon l'une quelconque des revendications précédentes, **caractérisé en ce que** la vitesse circonférentielle de l'un des galets dans un système, vue le long de la direction de transport des particules, est supérieure ou égale à la vitesse circonférentielle de l'un des galets dans le système immédiatement précédent.

4. Dispositif selon l'une quelconque des revendications précédentes, **caractérisé en ce qu'**au moins un galet dans chaque système à galets est monté sur un premier châssis (4) qui est déplaçable et réglable par rapport un second châssis (2) sur lequel les autres galets de chaque système à galets sont montés, et **en ce que** le premier châssis est raccordé à un système de pression (8) qui force le premier châssis avec une pression réglable dans la direction du second châssis, lequel système de pression permet un déplacement du premier châssis dans une direction en éloignement du second châssis si un excès de pression réglable est généré dans l'une des lignes de contact et/ou une pression maximale réglable est atteinte.

5. Dispositif selon l'une quelconque des revendications précédentes, **caractérisé en ce qu'**au moins une partie des galets ont une certaine surface de galet avec un profil doté d'un diamètre variable vu dans la direction circonférentielle d'un galet.

6. Procédé de traitement d'un mélange de particules (12), lequel mélange contient des particules consistant en des « parties oblongues » telles que des morceaux de fil, des morceaux de tube, des bandes et des parties collées à celles-ci, ou éventuellement des particules détachées avec un module d'élasticité qui dévie considérablement du module d'élasticité des parties oblongues, dans lequel au moins un dispositif de traitement selon l'une quelconque des revendications 1 à 5 est utilisé, **caractérisé en ce qu'**avant que le dispositif de traitement (1) soit alimenté en particules, les particules sont séparées les unes des autres au moyen d'un dispositif de détachement (11), **en ce que**, entre le dispositif de détachement et de traitement, le mélange de particules est séparé en particules de densité élevée et basse respectivement, et **en ce que** la séparation est effectuée en accélérant le mélange des particules entre le dispositif de détachement et de traitement et en utilisant l'inertie des particules lors de la séparation des particules de densité élevée et basse respectivement.

7. Procédé selon la revendication 6, **caractérisé en ce que** le mélange de particules fait une chute libre entre le dispositif de détachement et de traitement et est soumis à un flux d'air transversal pendant cette chute libre.
